(19) Europäisches Patentamt
European Patent Office
Office européen des brevets

(11) **EP 2 357 815 A1**

(12) **EUROPEAN PATENT APPLICATION**
published in accordance with Art. 153(4) EPC

(43) Date of publication:
**17.08.2011 Bulletin 2011/33**

(51) Int Cl.:
*H04N 5/93* (2006.01)   *G11B 20/10* (2006.01)
*G11B 27/10* (2006.01)   *H04N 5/91* (2006.01)

(21) Application number: **09825881.7**

(22) Date of filing: **05.11.2009**

(86) International application number:
**PCT/JP2009/005880**

(87) International publication number:
**WO 2010/055627 (20.05.2010 Gazette 2010/20)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.11.2008   JP 2008292269**
**17.11.2008   JP 2008293021**

(71) Applicant: **Panasonic Corporation**
**Kadoma-shi**
**Osaka 571-8501 (JP)**

(72) Inventors:
• **KAMEZAWA, Hiroyuki**
**Chuo-ku**
**Osaka-shi**
**Osaka 540-6207 (JP)**

• **MORIOKA, Yoshihiro**
**Chuo-ku**
**Osaka-shi**
**Osaka 540-6207 (JP)**
• **MASUDA, Takuma**
**Chuo-ku**
**Osaka-shi**
**Osaka 540-6207 (JP)**

(74) Representative: **Ehlers, Jochen**
**Eisenführ, Speiser & Partner**
**Johannes-Brahms-Platz 1**
**DE-20355 Hamburg (DE)**

(54) **IMAGING DEVICE AND DIGEST PLAYBACK METHOD**

(57)   An imaging device comprises: a first memory unit operable to store one or a plurality of audio-video data, each composed of a plurality of scenes and including a video data and an audio data; a second memory unit operable to store one or a plurality of BGM data; a creating unit operable to create, based on information designating one or more of the scenes composing the audio-video data stored in the first memory unit, a playlist for digest playback that allows the one or more of the scenes to be played back continuously; and a playback unit operable to play back the audio-video data in accordance with the playlist for digest playback so as not to play back the audio data included in the audio-video data but so as to play back only the video data included in the audio-video data, and for playing back the BGM data stored in the second memory unit while playing back the video data.

FIG.1

Printed by Jouve, 75001 PARIS (FR)

EP 2 357 815 A1

## Description

TECHNICAL FIELD

The present invention relates to an imaging device and a digest playback method, particularly to an imaging device capable of playing back an audio-video image.

BACKGROUND ART

There have been provided imaging devices with a digest playback function for extracting some parts from an audio-video image and putting them together to play back in order to obtain a grasp of the entire audio-video image briefly. Patent Literature 1 discloses an electronic camera capable of performing a digest playback of a variously edited image of a picked-up audio-video image without editorial operation inputting that is a heavy burden on a user. The electronic camera is also capable of playing back additional audio (such as music and sound effect) while performing the digest playback of the picked-up audio-video image.

CITATION LIST

Patent Literature

PTL 1: JP 2005-260749 A

SUMMARY OF INVENTION

Technical Problem

The electronic camera disclosed in the above-mentioned patent literature gives no particular consideration to the audio being outputted even at a scene change during the digest playback of the audio-video image. Thus, the audio being outputted changes abruptly at the scene change during the digest playback. This causes the electronic camera to perform a digest playback in which it is difficult for the user to hear the audio.

The present invention is intended to provide an imaging device capable of performing a digest playback that is acoustically satisfactory to the user, and a digest playback method.

Solution to Problem

In order to solve the aforementioned problem, the present invention provides an imaging device including: a first memory unit operable to store one or a plurality of audio-video data, each composed of a plurality of scenes and including a video data and an audio data; a second memory unit operable to store one or a plurality of BGM (Background Music) data; a creating unit operable to create, based on information designating one or more of the scenes composing the audio-video data stored in the first memory unit, a playlist for digest playback that allows the one or more of the scenes to be played back continuously; and a playback unit operable to play back the audio-video data in accordance with the playlist for digest playback so as not to play back the audio data included in the audio-video data but so as to play back only the video data included in the audio-video data, and for playing back the BGM data stored in the second memory unit while playing back the video data.

The present invention also provides an imaging device including: a first memory unit operable to store a plurality of audio-video data, each composed of a plurality of scenes; a second memory unit operable to store a plurality of BGM data; a creating unit operable to create, based on information designating one or more of the scenes composing the audio-video data stored in the first memory unit, a playlist for digest playback that allows the one or more of the scenes to be played back continuously; a first accepting unit operable to accept a selection of the audio-video data to create the playlist for digest playback, and a second accepting unit operable to accept a selection of the BGM data to be played back while the selected audio-video data from the plurality of the audio-video data is played back in accordance with the playlist for digest playback. The second accepting unit accepts the selection of the BGM data after the first accepting unit accepts the selection of the audio-video data. The creating unit starts the creation of the playlist for digest playback after the first accepting unit accepts the selection of the audio-video data and before the second accepting unit accepts the selection of the BGM data.

The present invention further provides a digest playback method including: creating, based on information designating one or more of a plurality of scenes composing one or a plurality of audio-video data, a playlist for digest playback that allows the one or more of the scenes to be played back continuously; and playing back the audio-video data in accordance with the playlist for digest playback so as not to play back an audio data included in the audio-video data but so as to play back only a video data included in the audio-video data, and playing back one or a plurality of BGM data while playing back the video data.

Advantageous Effects of Invention

The present invention can provide an imaging device capable of performing a digest playback that is acoustically satisfactory to the user by playing back a continuous BGM data instead of an audio data.

BRIEF DESCRIPTION OF THE DRAWINGS

FIG. 1 is a block diagram of a digital video camera as one embodiment of the imaging device according to the present invention.

FIG. 2 is a schematic view for explaining a directory structure for files in a hard disk drive or a memory card.

FIG. 3 is a schematic view for explaining the relationships of the files in the hard disk drive or the memory card.

FIG. 4 is a flow chart for explaining the recording operation performed by the digital video camera to record an audio-video data.

FIG. 5 is a schematic view for explaining index creation, etc. performed by the digital video camera.

FIG. 6 is a flow chart for explaining a digest playback performed by the digital video camera.

FIG. 7 is a schematic view illustrating selection screens for the digest playback.

FIG. 8 is a schematic view for explaining specifically a method performed by the digital video camera for creating a playlist for digest playback from a plurality of audio-video data.

DESCRIPTION OF EMBODIMENTS

The present invention has been accomplished to provide an imaging device capable of performing a digest playback of audio-video image that is acoustically satisfactory to the user. Hereinafter, a video camera as an embodiment of the imaging device according to the present invention will be described.

[1. Embodiment]

[1-1. Overview]

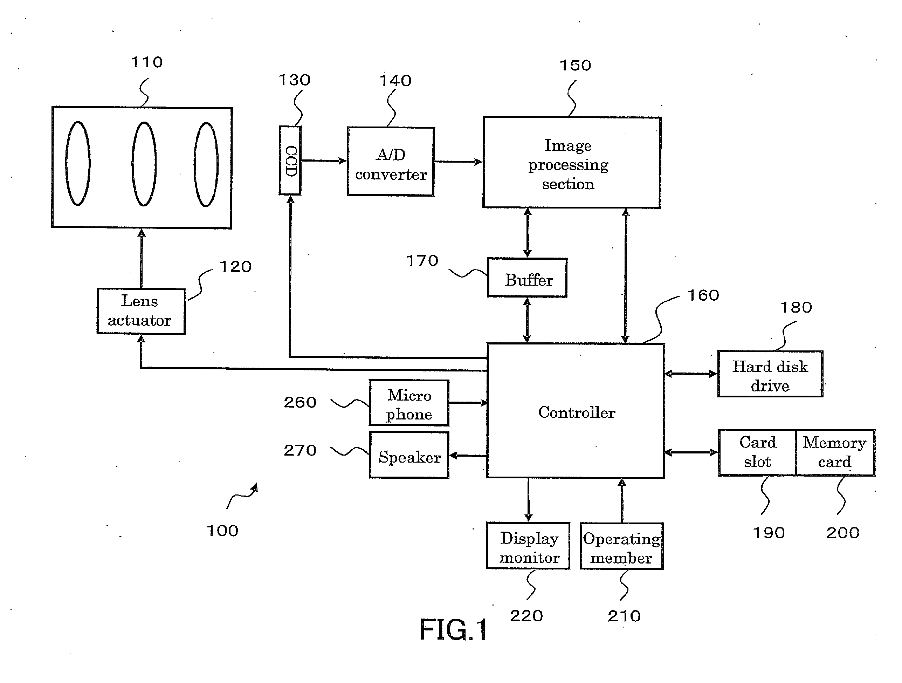

A digital video camera 100 in the present embodiment shown in FIG. 1 assigns a score to each of scenes in accordance with the camera work of a user, etc. when recording an audio-video image. The digital video camera 100 can perform a digest playback of the audio-video image by choosing one or more of the scenes in accordance with the score (information about importance) assigned to each of the scenes and playing back these scenes continuously.

[1-2. Configuration]

[1-2-1. Electrical configuration]

The electrical configuration of the digital video camera 100 in the present embodiment will be described with reference to FIG. 1. FIG. 1 is a block diagram showing the configuration of the digital video camera 100. The digital video camera 100 picks up a subject image formed by an optical system 110 composed of one or a plurality of lenses, using a CCD (Charge Coupled Device) image sensor 130. The video data generated by the CCD image sensor 130 is subject to various processes by an image processing section 150, and stored in a hard disk drive 180 or a memory card 200. Hereinafter, the configuration of the digital video camera 100 will be described in detail.

The optical system 110 is composed of a zoom lens and a focus lens. The zoom lens is moved along an optical axis so as to enlarge or reduce the subject image. The focus lens is moved along the optical axis so as to bring the subject into focus.

A lens actuator 120 drives the various lenses included in the optical system 110. For example, a zoom motor for driving the zoom lens and a focus motor for driving the focus lens serve as the lens actuator 120.

The CCD image sensor 130 picks up the subject image formed by the optical system 110 and generates a video data. The CCD image sensor 130 performs various operations such as exposure, transfer, and electronic shutter operations.

An A/D (Analog to Digital) converter 140 converts the analog video data generated by the CCD image sensor 130 into a digital video data.

The image processing section 150 performs various processes on the video data generated by the CCD image sensor 130. The image processing section 150 performs the processes on the video data generated by the CCD image sensor 130 to generate a video data to be displayed on a display monitor 220 as well as to generate a video data to be stored in the hard disk drive 180 or the memory card 200. For example, the image processing section 150 performs various processes, such as gamma correction, white balance correction, and defect correction, on the video data generated by the CCD image sensor 130. Moreover, the image processing section 150 can detect whether the video data generated by the CCD image sensor 130 includes an image of a human face, using a specified face detection algorithm. Furthermore, the image processing section 150 compresses the video data generated by the CCD image sensor 130, using a compression format in compliance with MPEG-4/AVC (Moving Picture Experts Group-4/Advanced Video Coding) standard, for example. The image processing section 150 can be composed of a DSP (Digital Signal Processor) or a microcomputer, for example.

A controller 160 is a control unit operable to control the entire video camera 100. The controller 160 can be composed of a semiconductor element, for example. The controller 160 may be composed only of hardware, or may be composed of hardware and software in combination. The controller 160 can be composed of a microcomputer, for example.

A buffer 170 functions as a working memory for the image processing section 150 and the controller 160. The buffer 170 can be composed of a DRAM (Dynamic Random Access Memory) or a ferroelectric memory, for example.

The hard disk drive 180 can store data such as video files generated by the image processing section 150. The memory card 200 is attachable to and detachable from a card slot 190. The memory card 200 can be connected mechanically and electrically to the card slot 190. The memory card 200 includes, for example, a flash memory or a ferroelectric memory, and can store data such as the video files generated by the image processing section 150. One or a plurality of BGM data are stored in the hard disk drive 180 or the memory card 200 in advance.

An operating member 210 is a term collectively referring to user interfaces for accepting operations from a user. For example, the operating member 210 includes a cross key and decision button for accepting operations from a user.

The display monitor 220 can display an image that the video data generated by the CCD image sensor 130 represents, and an image that the video data read from the hard disk drive 180 or the memory card 200 represents.

A microphone 260 collects audio. The audio collected by the microphone 260 is recorded in the hard disk drive 180 or the memory card 200 as an audio data.

A speaker 270 outputs the audio data included in the audio-video data stored in the hard disk drive 180 or the memory card 200. The audio data is included in the audio-video data so as to be superimposed on the video data. Moreover, the speaker 270 outputs the BGM data stored in the hard disk drive 180 or the memory card 200 while the digest playback of the audio-video data is performed.

[1-2-2. File relationships in the hard disk drive and the memory card]

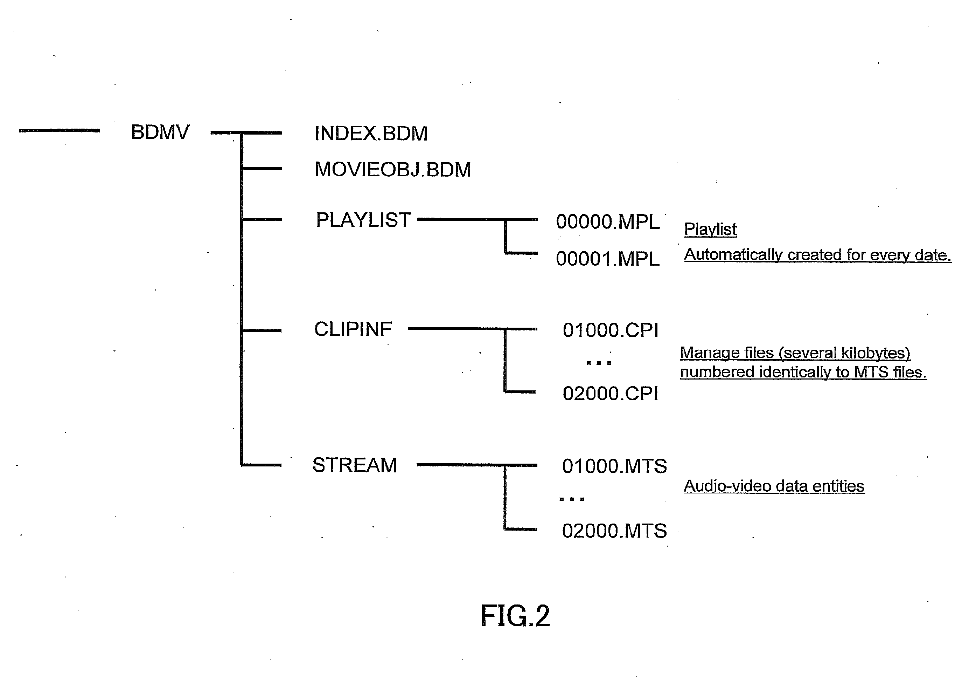

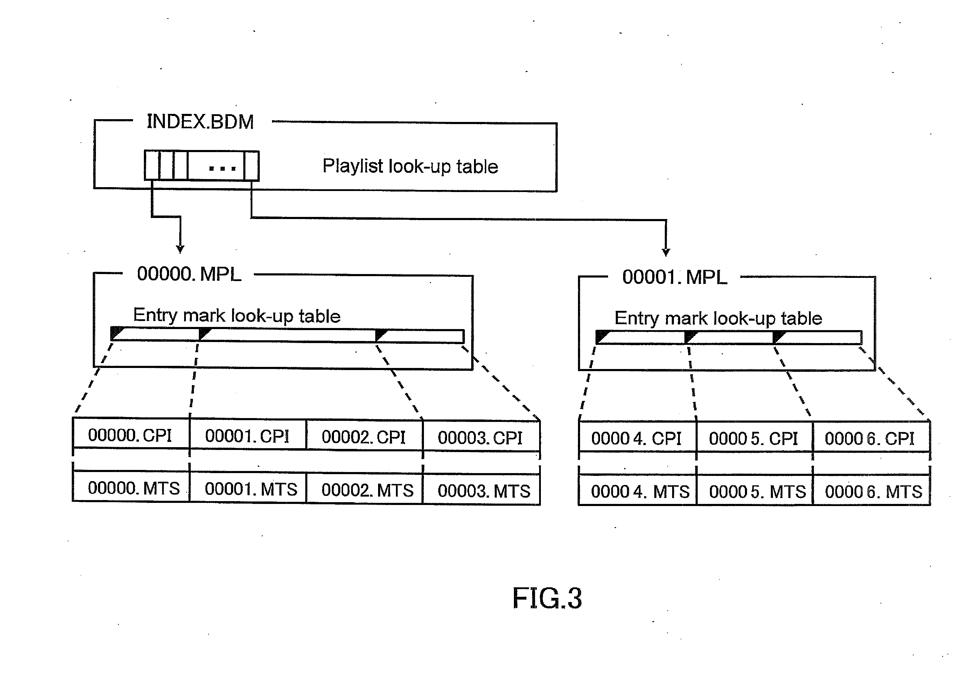

The file relationships in the hard disk drive 180 and the memory card 200 will be described with reference to FIG. 2 and FIG. 3. FIG. 2 is a schematic view for explaining the directory structure for the files in the hard disk drive 180 and the memory card 200. FIG. 3 is a schematic view for explaining the relationships of the files explained with reference to FIG. 2.

First, the directory structure that the hard disk drive 180 and the memory card 200 have will be described with reference to FIG. 2. Since the digital video camera 100 is in compliance with AVCHD (Advanced Video Codec High Definition, registered trademark) standard, the hard disk drive 180 and the memory card 200 have a directory structure as shown in FIG. 2. In the hard disk drive 180 and the memory card 200, "INDEX.BDM", "MOVIEOBJ.BDM", "PLAYLIST", "CLIPINF", and "STREAM" are stored in "BDMV" directory.

The "INDEX.BDM" is a management file that manages the types of files stored in a recording medium. The "MOVIEOBJ.BDM" is a file that defines the method for playing back the stored audio-video data.

The "PLAYLIST" stores playlists, which have the file extension "MPL". Here, each playlist is a management file that groups one or a plurality of audio-video data based on an optional rule and manages them. For example, in the digital video camera 100, the playlist manages collectively all the audio-video data picked up on the same day. In this case, the playlist has information about the date of pick-up of the audio-video data that it manages. By referring to the playlist managing the audio-video data, the controller 160 can identify the date of pick-up of the audio-video data.

The "CLIPINF" stores management files (hereinafter referred to as CPI files), which have the file extension "CPI". The CPI files are in one-to-one correspondence with audio-video data, which have the file extension "MTS". Each CPI file has information about the corresponding audio-video data (for example, information about the angle of view of the audio-video image, and information about the type of the audio data in the audio-video data).

The "STREAM" stores audio-video data (hereinafter referred to as MTS files), which have the file extension "MTS".

The relationship between the directories and files explained above will be described with reference to FIG. 3. The "INDEX.BDM" has a playlist look-up table that manages the playlists recorded in the recording medium. Each playlist with the file extension "MPL" has an entry mark look-up table that manages the CPI files. The CPI files are in one-to-one correspondence with the MTS files.

[1-2-3. Functions in the present invention]

The hard disk drive 180 or the memory card 200 in the present embodiment functions as a first memory unit operable to store one or a plurality of audio-video data according to the present invention, and as a second memory unit operable to store one or a plurality of BGM data according to the present invention. The controller 160 in the present embodiment functions as a creating unit operable to create the playlist for digest playback according to the present invention, and as a playback unit operable to play back the audio-video data in accordance with the playlist for digest playback according to the present invention.

The operating member 210 in the present embodiment functions as a first accepting unit operable to accept a selection of the audio-video data to create the playlist for digest playback according to the present invention, and as a second accepting unit operable to accept a selection of the BGM data to be played back while the selected audio-video data is played back according to the present invention. The display monitor 220 in the present embodiment functions as a displaying unit that displays an indication that the creation of the playlist for digest playback is not completed in the case where the creation of the playlist for digest playback according to the present invention is not completed.

[1-3. Operation]

[1-3-1. Recording operation]

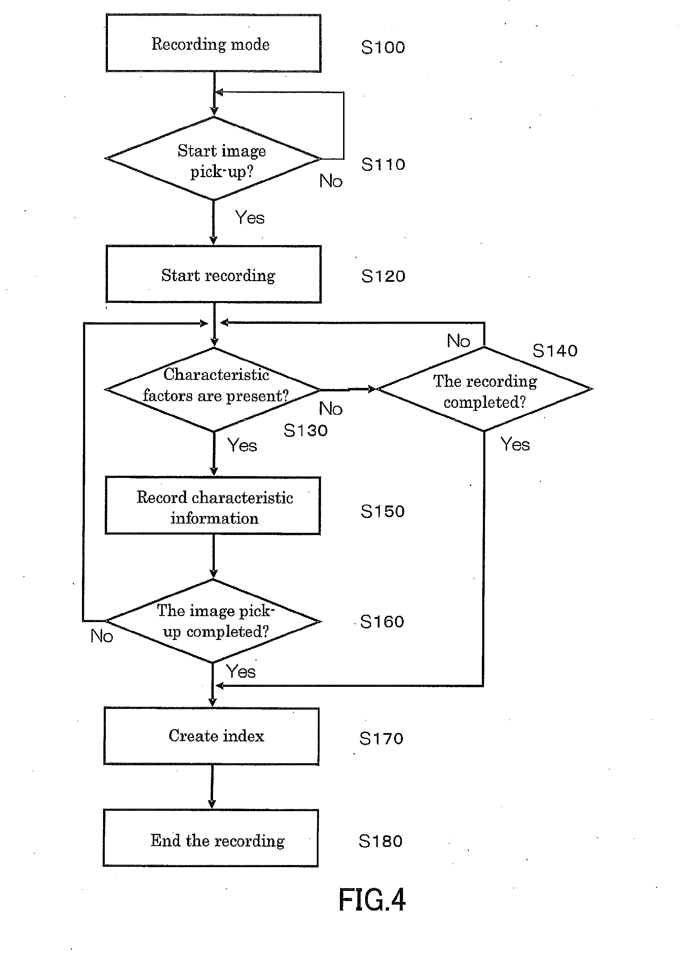

The recording operation of the digital video camera 100 in the present embodiment will be described with reference to FIG. 4. FIG. 4 is a flow chart for explaining the recording operation of the digital video camera 100 in the present embodiment.

A user can set the digital video camera 100 to recording mode by manipulating a mode dial, etc. included in the operating member 210 (S100). When the digital video camera 100 is set to the recording mode, the controller 160 stands by until the user presses a pick-up start button included in the operating member 210 (S110).

When the pick-up start button is pressed, the controller 160 records sequentially the video data generated by the CCD image sensor 130 and the audio data generated by the microphone 260 in the hard disk drive 180 or the memory card 200 (S120). When the recording of the video data is started, the controller 160 decides whether characteristic factors are present (S130). The "characteristic factors" will be described later.

If the controller 160 decides that no characteristic factors are present, the controller 160 decides whether a pick-up stop button included in the operating member 210 is pressed (S140).

In contrast, if the controller 160 decides that the characteristic factors are present, the controller 160 allows the video data generated when the characteristic factors are present by the CCD image sensor 130 to be stored in the hard disk drive 180 or the memory card 200 with corresponding scores assigned to the characteristic factors (S150). The correspondence between the video data and the scores assigned to the characteristic factors will be described later.

When the video data and the corresponding scores assigned to the characteristic factors are stored in the hard disk drive 180 or the memory card 200, the controller 160 decides whether the pick-up stop button included in the operating member 210 is pressed (S160).

When the controller 160 decides that the pick-up stop button is pressed, the controller 160 creates indices for the audio-video data, in each of which the audio data is superimposed on the video data, that are stored in the hard disk drive 180 or the memory card 200 (S170). The method for creating the indices will be described later.

After creating the indices, the controller 160 ends the recording operation (S180).

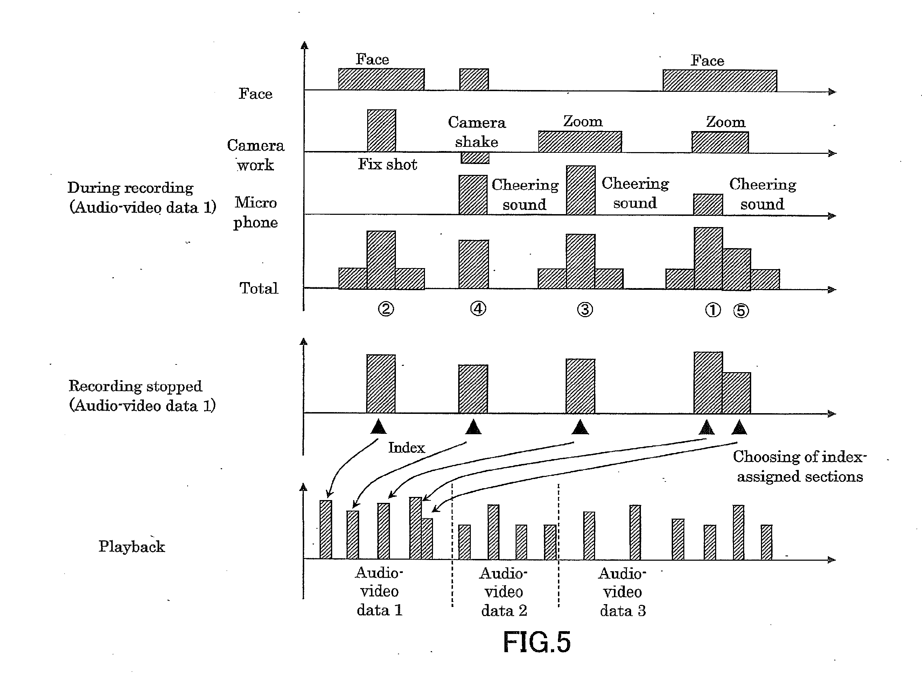

Next, the "characteristic factors", the correspondence between the audio-video data and the score assigned to the characteristic factor, and the method for creating the indices will be described with reference to FIG. 5. FIG. 5 is a schematic view for explaining these.

The digital video camera 100 in the present embodiment assigns a score to each of the scenes composing an audio-video data, based on three items. The items based on which the score is assigned are the "characteristic factors."

The first item is "face". In the case where the image processing section 150 detects a "face" included in the video data generated by the CCD image sensor 130, the controller 160 allows the video data generated by the CCD image sensor 130 at the time of the face detection to be stored in the hard disk drive 180 or the memory card 200 with a specified corresponding score.

The second item is "camera work." Examples of the camera work include "fix shot", "camera shake", and "zoom". Here, the fix shot is a pick-up method in which a specified subject image is picked up continuously for at least a certain time. Scenes thus generated by the fix shot are important in many cases. Thus, a specified score is given to the video data generated by the CCD image sensor 130 when the fix shot is performed. The camera shake is a shake that causes a blur on a pick-up image in the case where the user shakes the digital video camera 100 when picking up the image. Since scenes thus generated under the camera shake are scenes of unsuccessful pick-up, they are not so important in many cases. Thus, a specified score is subtracted from the score of the video data generated by the CCD image sensor 130 under the camera shake. The zoom is a pick-up method in which the image of a specified subject among the subjects currently being picked up is enlarged while being picked up. Scenes generated through the zoom operation are important in many cases. Thus, a specified score is given to the video data generated by the CCD image sensor 130 during the zoom operation.

The third item is "microphone." In accordance with the volume of the audio collected by the microphone 260, a specified score is given to the video data generated by the CCD image sensor 130 during the audio collection. Scenes such as those with a large volume of cheering sound collected by the microphone 260 are important in many cases. Thus, a specified score is given to the video data generated by the CCD image sensor 130 at that time, in accordance with the volume of cheering sound.

By giving the specified scores to the video data according to the "characteristic factors" in this way, it is possible to bring each of the scenes composing the audio-video data into correspondence with a score as shown in Fig. 5. In the digital video camera 100 in the present embodiment, these scenes have a length of 4 seconds uniformly. However, the digital video camera 100 does not necessarily have to be configured in such a manner. The length may vary among the scenes, from 3 to 10 seconds, for example. Thereby, the length flexibly can be changed depending on the characteristic of the scene, making it possible to divide the image at a point comfortable to the user.

Next, the method for creating the indices will be described. When the user presses the pick-up stop button, the controller 160 creates indices for the audio-video data recorded in the hard disk drive 180 or the memory card 200. Specifically, the controller 160 compares the scores of each video data included in each of the scenes composing the audio-video data, and assigns indices to a specified number of scenes, respectively, in descending order of the scores. For example, in the case of FIG. 5, five scenes with highest five scores preferentially are extracted from the scenes composing a generated audio-video data. Accordingly, indices of 1 to 5 are assigned to these five high-score scenes, respectively. The indices thus assigned are recorded in the hard disk drive 180 or the memory card 200 as information designating specified scenes, together with the audio-video data. In the audio-video data 2 and 3 shown in FIG. 5, indices also are given and recorded in the same manner as in the audio-video data 1.

[1-3-2. Playback operation]

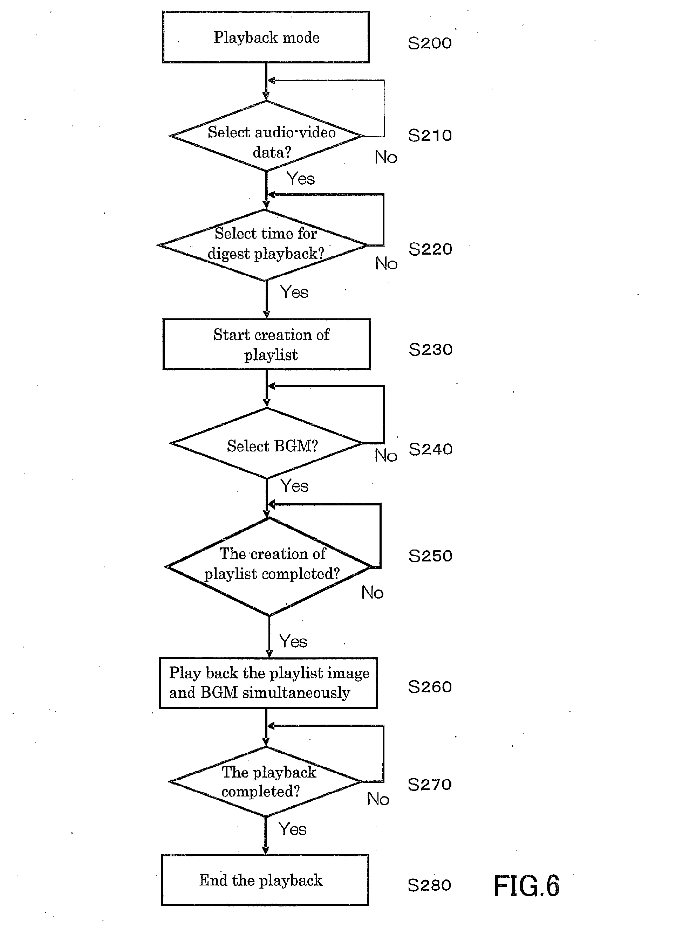

The playback operation of the digital video camera 100 in the present embodiment will be described with reference to FIG. 6. FIG. 6 is a flow chart for explaining the playback operation of the digital video camera 100 in the present embodiment.

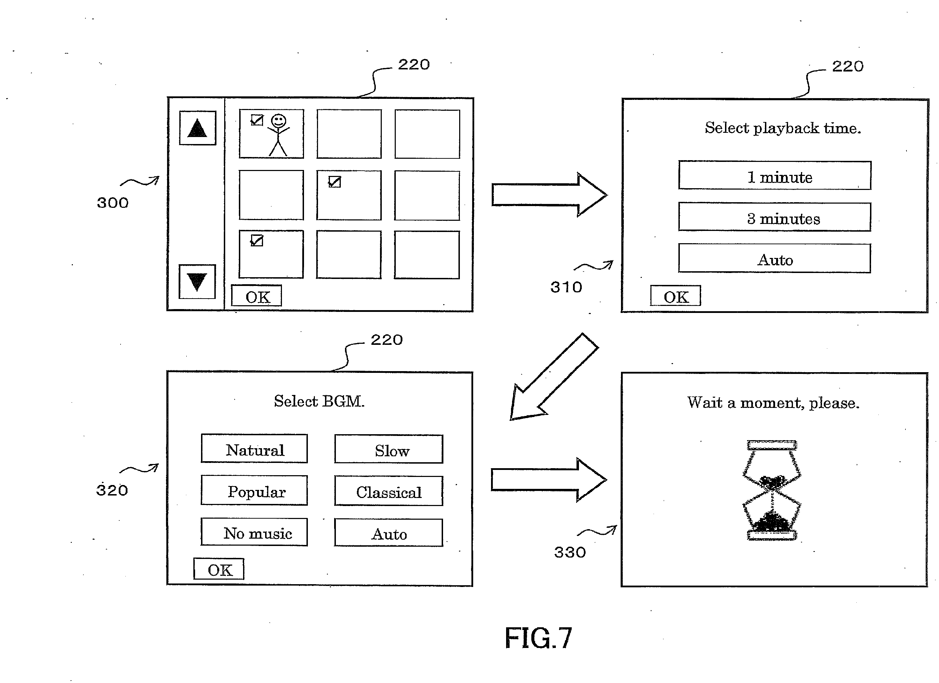

The user can set the digital video camera 100 to digest playback mode by manipulating the mode dial, etc. included in the operating member 210 (S200). The digest playback mode is not a usual playback mode to play back all the scenes composing the audio-video data but is a mode to play back only important scenes chosen from the scenes composing the audio-video data. When the digital video camera 100 is set to the digest playback mode, the controller 160 stands by until the user selects one or a plurality of audio-video data to be subject to the digest playback (S210). For example, the user can select one or a plurality of audio-video data to be subject to the digest playback on a screen such as a screen 300 shown in FIG. 7. In the digital video camera 100, a plurality of audio-video data can be used for a digest playback. However, the digital video camera 100 does not necessarily have to be configured in such a manner. It may be configured so that only one audio-video data is used for a digest playback, for example.

When the user selects the audio-video data to be subject to the digest playback, the controller 160 stands by until accepting a selection from the user about the total playback time for the digest playback (S220). For example, the user can select the total playback time for the digest playback on a screen such as a screen 310 shown in FIG. 7. Here, "Auto" indicates a mode to play back all the scenes with scores equal to or higher than a specified score. By selecting the "Auto", the user can have a digest playback in which important scenes are less likely to be missed.

When the user selects the total playback time for the digest playback, the controller 160 starts creating the playlist for digest playback based on the indices assigned respectively to the scenes composing the audio-video data selected by the user (S230). For example, as shown in FIG. 5, the controller 160 chooses the index-assigned scenes, and creates the playlist for digest playback indicating these scenes. The chosen scenes are played back continuously. In short, the playlist for digest playback is a management file for playing back continuously the chosen scenes based on the information designating the chosen scenes. Although all the index-assigned scenes are chosen in FIG. 5, the configuration does not necessarily have to be like this. For example, the number of the scenes to be chosen may be determined in accordance with the total playback time for the digest playback. In this case, it is possible to use a configuration in which high-score scenes are chosen preferentially in descending order of the score. This makes it possible to achieve a digest playback in which scenes more important to the user are chosen. In the case of choosing scenes from across a plurality of audio-video data, it is possible not to select the scenes to be chosen in accordance simply with the scores assigned to the scenes, but it is possible to select the scenes evenly from across all of the audio-video data. This makes it possible to avoid a situation in which the scenes are chosen unevenly from a part of the audio-video data despite the fact that a plurality of audio-video data are selected by the user.

The created playlist for digest playback may be stored in a volatile memory or in a nonvolatile memory. In the case where the playlist is stored in a nonvolatile memory, the digest playback can be re-performed at a higher speed on the same audio-video data.

Upon starting the creation of the playlist for digest playback, the controller 160 stands by until the user selects a BGM data (S240). The BGM data selected here is a BGM data to be played back while the digest playback of the audio-video data is performed. For example, the user can select the BGM data on a selection screen such as a screen 320 (FIG. 7), using the operating member 210 (FIG. 1).

When the user selects the BGM data, the controller 160 decides whether the creation of the playlist for digest playback is completed (S250).

If the controller 160 decides that the creation of the playlist for digest playback is not completed, the controller 160 allows the display monitor 220 to display an indication notifying that the playlist for digest playback is being created. In short, the display monitor 220 displays an indication that the creation of the playlist is not completed. For example, the controller 160 allows the display monitor 220 to display an image of an hourglass as shown in a screen 330 to notify the user that the playlist for digest playback is being created. This prevents the user from misunderstanding that the digital video camera 100 is broken even when the digest playback fails to start immediately.

In contrast, if the controller 160 decides that the creation of the playlist for digest playback is completed, the controller 160 plays back the BGM data selected by the user while playing back the audio-video data in accordance with the created playlist for digest playback (S260). After starting the playback of the audio-video data in accordance with the playlist for digest playback and the playback of the BGM data, the controller 160 decides whether the playback of the audio-video data in accordance with the playlist for digest playback is completed (S270). If the controller 160 decides that the playback of the audio-video data in accordance with the playlist for digest playback is completed, the controller 160 ends the playback mode (S280). The digital video camera 100 in the present embodiment plays back the audio-video data in accordance with the playlist for digest playback so as not to play back the audio data included in the audio-video data but so as to play back the BGM data instead.

As described above, the digital video camera 100 in the present embodiment plays back the BGM data while playing back the scenes that the playlist for digest playback indicates. Such a configuration prevents the audio being played back from changing abruptly into completely different audio even during the digest playback in which discontiguous scenes are put together to be contiguous. As a result, the digital video camera 100 is capable of performing a digest playback in which audio that is acoustically satisfactory to the user is played back.

In the present embodiment, the playlist for digest playback is a management file indicating locations at which the specified scenes are stored. Thus, in the playback of the audio-video data in accordance with the playlist for digest playback, it takes time to refer to the next coming scene at the time of scene change, causing a waiting time. That is, when the audio data is played back in the digest playback as before, neither the video data nor the audio data is played back for a moment every time the scene changes, making the digest playback uncomfortable acoustically and visually. In contrast, in the present embodiment, the continuous BGM data is played back as audio instead of the audio data so that no interruption occurs in the audio being played back. As a result, a smooth and acoustically comfortable digest playback can be performed. Moreover, the continuous BGM data can make the user feel as if the video data was being played back continuously even when the video data is not played back for a moment. This produces a sense of unification of the image. As described above, the present invention is particularly effective in the case where the playlist for digest playback is a management file indicating locations at which the specified scenes are stored.

The digital video camera 100 accepts the selection of the BGM data from the user after accepting the selection of the audio-video data and the selection of the total playback time for the digest playback from the user. Such a configuration allows the digital video camera 100 to proceed with the creation of the playlist for digest playback as much as possible while the user wavers in selection of the BGM data. As a result, it is possible to shorten the time from when the user selects the BGM data to when the digest playback is started. The reason is that the digital video camera 100 can start creating the playlist for digest playback before the user selects the BGM data because the creation of the playlist for digest playback is not affected no matter which music is selected as the BGM data. However, the digital video camera 100 does not necessarily have to have such a configuration. The digital video camera 100 may create the playlist for digest playback after accepting the selection of the BGM data from the user, for example.

[2. Other embodiments]

So far, one embodiment according to the present invention has been described. However, the present invention is not limited to this. Other embodiments according to the present invention are summarized in this section.

In the above-mentioned embodiment, five indices are provided to each recorded audio-video data. However, the configuration does not necessarily have to be like this. For example, six or ten indices may be provided to each recorded audio-video data. In short, a specified number of indices need only be provided, and the number herein is optional.

However, the indices do not necessarily have to be provided in a specified number. The number of the indices may vary depending on the recording time of the audio-video data, for example. Six indices may be provided for the total recording time of one minute, while eighteen indices may be provided for the total recording time of three minutes. This is because a larger number of important scenes are recorded in a longer recording time than in a shorter recording time. Here, the relationship between the total recording time and the number of the indices does not need to be linear, and it may be nonlinear. For example, six indices may be provided for the total recording time of one minute, while ten indices may be provided for the total recording time of four minutes. This is because when a comparison is made between one long-time audio-video data and a plurality of short-time audio-video data that sum up to a time equal to that of the long-time audio-video data, the long-time audio-video data includes a smaller number of important scenes than the short-time audio-video data does, as known from experience. That is, it is possible to assign indices to important scenes more accurately by preventing the number of the indices from simply increasing linearly in the case where the recording time is long.

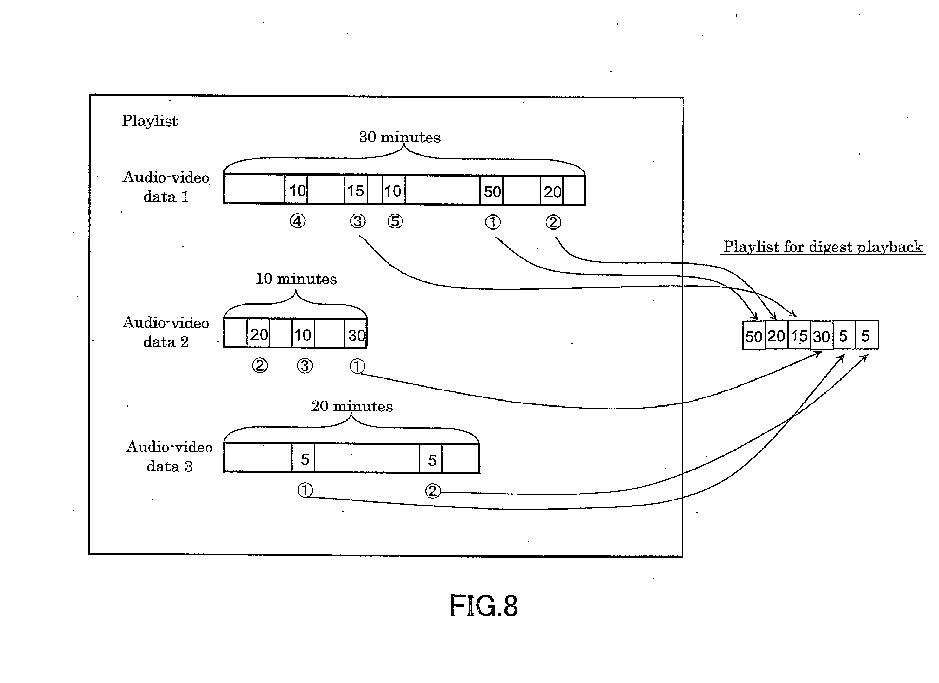

Furthermore, as described in the above-mentioned embodiment, it is unnecessary to chose all the index-assigned scenes when creating the playlist for digest playback. For example, as shown in Fig. 8, it is also possible to create the playlist for digest playback so that the recording time of each audio-video data is proportional to the number of the scenes referred to from each audio-video data when the digest playback is performed across a plurality of audio-video data. In this case, the number of the scenes to be referred to from each audio-video data by the playlist for digest playback is decided by the following formula (1).

$$Ni = (Ti \,/\, T) \times N \cdot \cdot \cdot (1)$$

T, Ti, N, and Ni in the formula indicate the followings.

T: Total recording time of target audio-video data for digest playback.
Ti: The recording time of each audio-video data from which scenes are extracted.
N: The total number of index-assigned scenes necessary to perform the digest playback.
Ni: The number of index-assigned scenes to be extracted from a specified audio-video data.

In the example shown in FIG. 8, the total number (N) of the index-assigned scenes necessary to perform the digest playback is six. In this case, the number of the index-assigned scenes to be referred to from the audio-video data 1 by the playlist for digest playback can be calculated as $(30 \,/\, 60) \times 6 = 3$ (scenes). The number of index-assigned scenes to be referred to from the audio-video data 2 by the playlist for digest playback can be calculated as $(10 \,/\, 60) \times 6 = 1$ (scenes). The number of index-assigned scenes to be referred to from the audio-video data 3 by the playlist for digest playback can be calculated as $(20 \,/\, 60) \times 6 = 2$ (scenes).

By selecting the number of the scenes to be played back from each audio-video data based on the recording time of each audio-video data as described above when performing the digest playback across a plurality of audio-video data, it is possible to avoid a situation in which the scenes are chosen unevenly from a part of the audio-video data despite of the fact that a plurality of audio-video data are selected by the user.

In the above-mentioned embodiment, two recording media, which are the hard disk drive 180 and the memory card 200, are provided as recording media. However, the configuration is not necessarily limited to this. At least one recording medium is all that is needed as a recording medium.

The optical system and the lens actuator of the digital video camera 100 are not limited to those shown in FIG. 1. For example, although the optical system shown in FIG. 1 is an optical system with 3-group structure, it may have a lens structure of another group type. Each lens may be composed of a single lens, or may be composed of a lens group including a plurality of lenses.

Moreover, although the CCD image sensor 130 is exemplified as an image pick-up unit in the above-mentioned embodiment, the present invention is not limited to a configuration including this. For example, the image pick-up unit may be a CMOS (Complementary Metal Oxide Semiconductor) image sensor, or a NMOS (Negative-channel Metal Oxide Semiconductor) image sensor.

The memory unit operable to store the BGM data is not limited to the hard disk drive 180 and the memory card 200. For example, it may be another internal memory (not shown).

Moreover, although scores are assigned respectively to the scenes composing the audio-video data based on three items in the above-mentioned embodiment, the scores do not necessarily have to be assigned based on three items. For example, the scores may be based on one or two of these items, or may be performed based on four or more items by adding at least one item to the original three. That is, it is possible to determine optionally the number of the items (characteristic factors) based on which the scores are assigned.

INDUSTRIAL APPLICABILITY

The present invention is applicable, for example, to digital video cameras and digital still cameras.

**Claims**

1. An imaging device comprising:

a first memory unit operable to store one or a plurality of audio-video data, each composed of a plurality of scenes and including a video data and an audio data;
a second memory unit operable to store one or a plurality of BGM data;
a creating unit operable to create, based on information designating one or more of the scenes composing the audio-video data stored in the first memory unit, a playlist for digest playback that allows the one or more of the scenes to be played back continuously; and
a playback unit operable to play back the audio-video data in accordance with the playlist for digest playback so as not to play back the audio data included in the audio-video data but so as to play back only the video data included in the audio-video data, and for playing back the BGM data stored in the second memory unit while playing back the video data.

2. The imaging device according to claim 1, wherein the playlist for digest playback is a management file indicating one or more locations in the first memory unit at which the one or more of the scenes are stored.

3. The imaging device according to claim 1, wherein:

the first memory unit stores the audio-video data composed of the scenes with corresponding information about importance of each of the scenes;

the creating unit selects the one or more of the scenes from the audio-video data stored in the first memory unit based on the information about the importance of each of the scenes; and the creating unit creates the playlist for digest playback that allows the selected one or more of the scenes to be played back continuously, based on the information designating the selected one or more of the scenes.

4. The imaging device according to claim 1, wherein:

the first memory unit stores the plurality of the audio-video data;

the second memory unit stores the plurality of the BGM data;

the imaging device further comprises a first accepting unit operable to accept a selection of the audio-video data to create the playlist for digest playback;

the imaging device further comprises a second accepting unit operable to accept a selection of the BGM data to be played back while the selected audio-video data from the plurality of the audio-video data is played back in accordance with the playlist for digest playback;

the second accepting unit accepts the selection of the BGM data after the first accepting unit accepts the selection of the audio-video data; and

the creating unit starts the creation of the playlist for digest playback after the first accepting unit accepts the selection of the audio-video data and before the second accepting unit accepts the selection of the BGM data.

5. The imaging device according to claim 4, further comprising a displaying unit, wherein in the case where the creation of the playlist for digest playback by the creating unit is not completed when the second accepting unit accepts the selection of the BGM data from a user, the displaying unit displays an indication that the creation of the playlist for digest playback is not completed.

6. An imaging device comprising:

a first memory unit operable to store a plurality of audio-video data, each composed of a plurality of scenes;

a second memory unit operable to store a plurality of BGM data;

a creating unit operable to create, based on information designating one or more of the scenes composing the audio-video data stored in the first memory unit, a playlist for digest playback that allows the one or more of the scenes to be played back continuously;

a first accepting unit operable to accept a selection of the audio-video data to create the playlist for digest playback, and

a second accepting unit operable to accept a selection of the BGM data to be played back while the selected audio-video data from the plurality of the audio-video data is played back in accordance with the playlist for digest playback, wherein:

the second accepting unit accepts the selection of the BGM data after the first accepting unit accepts the selection of the audio-video data; and

the creating unit starts the creation of the playlist for digest playback after the first accepting unit accepts the selection of the audio-video data and before the second accepting unit accepts the selection of the BGM data.

7. A digest playback method comprising:

creating, based on information designating one or more of a plurality of scenes composing one or a plurality of audio-video data, a playlist for digest playback that allows the one or more of the scenes to be played back continuously; and playing back the audio-video data in accordance with the playlist for digest playback so as not to play back an audio data included in the audio-video data but so as to play back only a video data included in the audio-video data, and playing back one or a plurality of BGM data while playing back the video data.

FIG.1

BDMV ──┬── INDEX.BDM

├── MOVIEOBJ.BDM

├── PLAYLIST ──┬── 00000.MPL  <u>Playlist</u>
│              └── 00001.MPL  <u>Automatically created for every date.</u>

├── CLIPINF ──┬── 01000.CPI
│             │     ...        <u>Manage files (several kilobytes)</u>
│             │              <u>numbered identically to MTS files.</u>
│             └── 02000.CPI

└── STREAM ──┬── 01000.MTS
             │     ...        <u>Audio-video data entities</u>
             └── 02000.MTS

FIG.2

EP 2 357 815 A1

FIG.3

```
        ┌─────────────────────┐
        │   Recording mode    │   S100
        └─────────────────────┘
                   │
                   ▼
              ╱─────────╲
            ╱  Start image ╲
           ⟨   pick-up?     ⟩  S110
            ╲             ╱  No
              ╲─────────╱
                   │ Yes
                   ▼
        ┌─────────────────────┐
        │   Start recording   │   S120
        └─────────────────────┘
                   │
                   ▼
              ╱─────────╲                    ╱─────────╲  No
            ╱ Characteristic ╲             ╱ The recording ╲   S140
           ⟨ factors are present? ⟩──────⟨  completed?     ⟩
            ╲               ╱  No           ╲             ╱
              ╲─────────╱    S130             ╲─────────╱
                   │ Yes                          │ Yes
                   ▼
        ┌─────────────────────┐
        │ Record characteristic │   S150
        │    information        │
        └─────────────────────┘
                   │
                   ▼
              ╱─────────╲
            ╱ The image pick- ╲
     No   ⟨  up completed?     ⟩  S160
            ╲               ╱
              ╲─────────╱
                   │ Yes
                   ▼
        ┌─────────────────────┐
        │    Create index     │   S170
        └─────────────────────┘
                   │
                   ▼
        ┌─────────────────────┐
        │  End the recording  │   S180
        └─────────────────────┘
```

FIG.4

FIG.5

```
┌─────────────────────────┐
│     Playback mode       │   S200
└─────────────────────────┘
             │
             ▼ ◄──────────┐
         ╱─────────╲      │
        ╱ Select audio·video ╲  S210
        ╲   data?   ╱──────┘
         ╲───────╱      No
             │ Yes
             ▼ ◄──────────┐
         ╱─────────╲      │
        ╱ Select time for ╲   S220
        ╲ digest playback? ╱──┘
         ╲───────╱      No
             │ Yes
┌─────────────────────────┐
│   Start creation of     │   S230
│       playlist          │
└─────────────────────────┘
             │
             ▼ ◄──────────┐
         ╱─────────╲      │
        ╱ Select BGM? ╲───┘   S240
         ╲───────╱   No
             │ Yes
             ▼ ◄──────────┐
         ╱─────────╲      │
        ╱ The creation of ╲   S250
        ╲ playlist completed? ╱┘
         ╲───────╱   No
             │ Yes
┌─────────────────────────┐
│ Play back the playlist image │ S260
│ and BGM simultaneously  │
└─────────────────────────┘
             │
             ▼ ◄──────────┐
         ╱─────────╲      │
        ╱ The playback ╲──┘   S270
        ╲ completed?   ╱  No
         ╲───────╱
             │ Yes
┌─────────────────────────┐
│    End the playback     │   S280
└─────────────────────────┘
```

FIG.6

300

220

☑ ☺

☑

☑

OK

310

220

Select playback time.

| 1 minute |

| 3 minutes |

| Auto |

OK

320

220

Select BGM.

| Natural | | Slow |
| Popular | | Classical |
| No music | | Auto |

OK

330

220

Wait a moment, please.

FIG.7

FIG.8

## INTERNATIONAL SEARCH REPORT

| | International application No. |
|---|---|
| | PCT/JP2009/005880 |

A. CLASSIFICATION OF SUBJECT MATTER
*H04N5/93*(2006.01)i, *G11B20/10*(2006.01)i, *G11B27/10*(2006.01)i, *H04N5/91*
(2006.01)i

According to International Patent Classification (IPC) or to both national classification and IPC

B. FIELDS SEARCHED

Minimum documentation searched (classification system followed by classification symbols)
H04N5/93, G11B20/10, G11B27/10, H04N5/91

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-260749 A  (Casio Computer Co., Ltd.), 22 September 2005 (22.09.2005), paragraphs [0031] to [0252]; fig. 1 to 29 (Family: none) | 1-7 |
| Y | JP 2005-184617 A  (Casio Computer Co., Ltd.), 07 July 2005 (07.07.2005), paragraph [0035] (Family: none) | 1-7 |

☒  Further documents are listed in the continuation of Box C.         ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 November, 2009 (19.11.09) | 09 February, 2010 (09.02.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

INTERNATIONAL SEARCH REPORT

| International application No. |
|---|
| PCT/JP2009/005880 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 6-165009 A  (Matsushita Electric Industrial Co., Ltd.), 10 June 1994 (10.06.1994), paragraphs [0010] to [0069]; fig. 1 to 11 & US 5809202 A            & US 6078726 A & EP 597450 A3           & EP 597450 A2 & DE 69333177 D          & DE 69333177 T & KR 10-0215586 B | 3 |
| Y | JP 2000-215019 A  (Canon Inc.), 04 August 2000 (04.08.2000), paragraphs [0065] to [0067] & US 2005/0254087 A1 | 4-6 |
| Y | JP 2006-303869 A  (Sony Corp.), 02 November 2006 (02.11.2006), paragraphs [0162] to [0164]; fig. 10 to 11 & US 2006/0259261 A1 | 5 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005260749 A